(19) Europäisches Patentamt
European Patent Office
Office européen des brevets

(11) **EP 4 239 727 A1**

(12) **EUROPEAN PATENT APPLICATION**
published in accordance with Art. 153(4) EPC

(43) Date of publication:
**06.09.2023 Bulletin 2023/36**

(21) Application number: **21907156.0**

(22) Date of filing: **17.12.2021**

(51) International Patent Classification (IPC):
**H01M 4/62** (2006.01)      **H01M 4/13** (2010.01)

(52) Cooperative Patent Classification (CPC):
**H01M 4/13; H01M 4/62**

(86) International application number:
**PCT/KR2021/019280**

(87) International publication number:
**WO 2022/131852 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020   KR 20200178282**

(71) Applicant: **Lg Chem, Ltd.
Seoul 07336 (KR)**

(72) Inventors:
• **WOO, Jungeun
  Daejeon 34122 (KR)**
• **KANG, Min Ah
  Daejeon 34122 (KR)**
• **SON, Jeong Man
  Daejeon 34122 (KR)**
• **LEE, Sungjin
  Daejeon 34122 (KR)**
• **HAN, Seon Hee
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **BINDER COMPOSITION FOR SECONDARY BATTERY, AND ELECTRODE MIXTURE**

(57)    The present disclosure relates to an electrode binder composition for rechargeable battery and an electrode mixture including the same. The electrode binder composition for rechargeable battery of the present disclosure can maintain a structural stability of the electrode even in repeated charge and discharge cycles, while having excellent properties in terms of a binding force, a mechanical property or the like, thereby improving the overall performance of the rechargeable battery.

**Description**

**[TECHNICAL FIELD]**

CROSS-REFERENCE TO RELATED APPLICATION(S)

This application claims the benefit of Korean Patent Application No. 10-2020-0178282 filed on December 18, 2020 with the Korean Intellectual Property Office, the disclosure of which is incorporated herein by reference in its entirety.

The present disclosure relates to an electrode binder composition for rechargeable battery and an electrode mixture including the same.

**[BACKGROUND ART]**

Due to the rapid increase in the use of fossil fuels, the demand for the use of alternative energy or clean energy is increasing, and as part thereof, the fields that are being studied most actively are the fields of power generation and power storage using electrochemistry.

Recently, along with the increase of the technological development and demand for mobile devices such as portable computers, portable phones, and cameras, the demand for rechargeable batteries has also sharply increased as an energy source. Among such rechargeable batteries is a lithium rechargeable battery having high energy density and operating potential, long cycle life, and low self-discharge rate, in which much research has been carried out and which is now commercialized and widely used.

Also, as interest in environmental issues grows, many research is being conducted on electric vehicles or hybrid vehicles that can replace fossil fuel engines, which are one of the main causes of air pollution. The lithium rechargeable battery is also used as a power source for such electric vehicles and hybrid vehicles.

In the lithium rechargeable battery, a lithium transition metal oxide is generally used as a positive electrode active material, and a graphite-based material is used as a negative electrode active material. The lithium rechargeable battery is manufactured by a method of mixing such an active material and a binder component, dispersing the mixture in a solvent to prepare a slurry, and then coating the slurry onto the surface of a current collector to form a mixture layer.

Generally, the lithium rechargeable battery is charged and discharged while repeating the process in which lithium ions of a positive electrode are intercalated into and deintercalated from a negative electrode. In this repeating process, a bond between the electrode active materials or the conductive materials may be loosened, a contact resistance between particles may increase and thus, a resistance of the electrode itself may also increase.

Therefore, the binder used for the electrode must be able to buffer the expansion and contraction of the electrode active material due to the intercalation and de-intercalation of lithium ions from the electrode while being able to maintain excellent binding force between the electrode active material and the current collector.

In particular, recently, in order to increase the discharge capacity of the electrode, natural graphite with a theoretical discharge capacity of 372 mAh/g is often used in combination with materials such as silicon, tin, and silicon-tin alloy, which have a large discharge capacity. Thereby, as charging and discharging are repeated, the volume expansion rate of the materials increases significantly, whereby detachment of the negative electrode material occurs, which causes a problem that the capacity of the battery is drastically reduced and the lifespan is shortened.

Further, in the lithium ion battery, a swelling phenomenon may occur due to the gas generated during decomposition of the electrolyte inside the battery. When the temperature of the battery rises in response to the use of electronic products, there may be a problem that the decomposition of the electrolyte is promoted and thus a swelling phenomenon is accelerated, and the stability of the battery is reduced.

Therefore, there is an urgent need to study an electrode binder and an electrode material that can maintain a structural stability of the electrode even in repeated charge and discharge cycles, while achieving excellent binding force to the extent that separation between the electrode active materials or between the electrode active materials and the current collector can be prevented.

**[DETAILED DESCRIPTION OF THE INVENTION]**

**[Technical Problem]**

It is one object of the present disclosure to provide an electrode binder composition for rechargeable battery that can maintain a structural stability of the electrode even in repeated charge and discharge cycles, while having excellent properties in terms of a binding force, a mechanical property or the like.

It is another object of the present disclosure to provide an electrode mixture for rechargeable battery comprising the above-mentioned electrode binder composition for rechargeable battery.

It is another object of the present disclosure to provide an electrode for rechargeable battery comprising the electrode mixture for rechargeable battery.

It is yet another object of the present disclosure to provide a rechargeable battery comprising the above-mentioned electrode for rechargeable battery.

**[Technical Solution]**

According to one aspect of the present disclosure, there is provided an electrode binder composition for rechargeable battery, comprising an emulsified polymer particle having a core-shell structure, wherein the emulsified polymer particle satisfies the following Relational Expression 1, and has a surface acidity value of 0.15 to 2.0 mmol/g.

$$[\text{Relational Expression 1}]$$

$$\text{AC-Core} < \text{AC-Shell}$$

in Relational Expression 1, AC-Core is the relative content (wt%) of a repeating unit derived from an unsaturated carboxylic acid-based monomer in a core of the emulsified polymer particle, and AC-Shell is the relative content (wt%) of a repeating unit derived from an unsaturated carboxylic acid-based monomer in a shell of the emulsified polymer particle.

More specifically, the electrode binder composition for rechargeable battery may satisfy the following Relational Expression 2.

$$[\text{Relational Expression 2}]$$

$$2 \times \text{AC-Core} < \text{AC-Shell}$$

in Relational Expression 2, AC-Core is the relative content (wt%) of a repeating unit derived from an unsaturated carboxylic acid-based monomer in a core of the emulsified polymer particle, and AC-Shell is the relative content (wt%) of a repeating unit derived from an unsaturated carboxylic acid-based monomer in a shell of the emulsified polymer particle.

According to an embodiment of the present disclosure, the core of the emulsified polymer particle may include a repeating unit derived from a conjugated diene-based monomer, a repeating unit derived from an aromatic vinyl-based monomer, a repeating unit derived from an alkyl (meth)acrylate-based monomer, and a repeating unit derived from an unsaturated carboxylic acid-based monomer.

In this case, the core of the emulsified polymer particle may contain about 50 to about 100 parts by weight of the repeating unit derived from the aromatic vinyl-based monomer based on 100 parts by weight of the repeating unit derived from the conjugated diene-based monomer, the lower limit thereof may be about 50 parts by weight or more, or about 60 parts by weight or more, or about 65 parts by weight or more, and the upper limit thereof may be about 100 parts by weight or less, or about 90 parts by weight or less, or about 80 parts by weight or less.

Further, the core of the emulsified polymer particle may contain about 5 to about 50 parts by weight of the repeating unit derived from the alkyl (meth)acrylate-based monomer based on 100 parts by weight of the repeating unit derived from the conjugated diene-based monomer, the lower limit thereof may be about 5 parts by weight or more, or about 10 parts by weight or more, or about 15 parts by weight or more, and the upper limit thereof may be about 50 parts by weight or less, or about 40 parts by weight or less, or about 30 parts by weight or less.

Further, the core of the emulsified polymer particle may contain about 1 to about 20 parts by weight of the repeating unit derived from the unsaturated carboxylic acid-based monomer based on 100 parts by weight of the repeating unit derived from the conjugated diene-based monomer, the lower limit thereof may be about 1 parts by weight or more, or about 5 parts by weight or more, or about 8 parts by weight or more, and the upper limit thereof may be about 20 parts by weight or less, or about 15 parts by weight or less, or about 12 parts by weight or less.

According to another embodiment of the present disclosure, the shell of the emulsified polymer particle may include an alkyl (meth)acrylate-based repeating unit and a repeating unit derived from an unsaturated carboxylic acid-based monomer.

In this case, the shell of the emulsified polymer particle may contain about 5 to about 100 parts by weight of the repeating unit derived from the unsaturated carboxylic acid-based monomer based on 100 parts by weight of the alkyl (meth)acrylate-based repeating unit, the lower limit thereof may be 5 parts by weight or more, or about 7 parts by weight or more, or about 10 parts by weight or more, and the upper limit thereof may be about 100 parts by weight or less, or about 80 parts by weight or less, or about 70 parts by weight or less.

In this case, the shell of the emulsified polymer particle may optionally further contain about 5 to about 70 parts by weight of the repeating unit derived from the aromatic vinyl-based monomer based on 100 parts by weight of the alkyl (meth)acrylate-based repeating unit. The lower limit thereof may be about 5 parts by weight or more, or about 10 parts by weight or more, or about 15 parts by weight or more, and the upper limit thereof may be about 70 parts by weight or less, or about 50 parts by weight or less, or about 40 parts by weight or less.

Representative examples of the conjugated diene-based monomer may include at least one selected from the group consisting of 1,3-butadiene, isoprene, chloroprene and piperylene, and preferably, it may be 1,3-butadiene.

Further, the alkyl (meth)acrylate-based monomer may include at least one selected from the group consisting of methyl acrylate, ethyl acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, lauryl acrylate, cetyl acrylate, stearyl acrylate, lauryl methacrylate, cetyl methacrylate, and stearyl methacrylate.

Further, the aromatic vinyl-based monomer may include at least one selected from the group consisting of styrene, α-methylstyrene, β-methylstyrene, p-t-butylstyrene, chlorostyrene, vinyl benzoic acid, vinyl benzoic acid methyl ester, vinyl naphthalene, chloromethylstyrene, hydroxymethylstyrene and divinylbenzene.

Further, the unsaturated carboxylic acid-based monomer may include at least one selected from the group consisting of acrylic acid, methacrylic acid, maleic acid, fumaric acid, glutaric acid, itaconic acid, tetrahydrophthalic acid, crotonic acid, isocrotonic acid, and nadic acid.

Further, the shell of the emulsified polymer particle may include a crosslinking bond formed by a crosslinking agent.

In this case, the crosslinking agent may be a compound including both an acryloyl group and an ethylenically unsaturated bond in a molecule.

According to an embodiment of the present disclosure, a weight ratio of the repeating unit derived from the unsaturated carboxylic acid-based monomer present on the surface of the emulsified polymer particle relative to the total weight of the emulsified polymer particle is about 2 wt% or more, preferably about 2.5 wt% or more, or about 3wt% or more, and about 20 wt% or less, or about 17 wt% or less, or about 15 wt% or less.

According to an embodiment of the present disclosure, the emulsified polymer particle may have a relative content of the repeating unit derived from the unsaturated carboxylic acid-based monomer to the total weight including the core and the shell, of about 5 wt% or more, preferably, about 6 wt% or more, or about 20 wt% or less, or about 15 wt% or less.

Further, the electrode binder composition for rechargeable battery may have an electrolyte solution uptake of 200% or less. Specifically, the lower limit thereof may be about 1% or more , or about 10% or more, or about 30% or more, and the upper limit thereof may be about 200% or less, or about 170% or less, or about 150% or less, or about 100% or less, or about 70% or less.

Further, the emulsified polymer particle may have a surface acidity value of about 0.15 to about 2.0 mmol/g, or about 0.15 mmol/g or more, or about 0.2 mmol/g or more, or about 0.3 mmol/g or more, or about 2.0 mmol/g or less, or about 1.5 mmol/g or less.

On the other hand, according to another aspect of the present disclosure, there is provided an electrode mixture for rechargeable battery, comprising the above-mentioned electrode binder composition for rechargeable battery and an electrode active material.

In this case, the electrode mixture for rechargeable battery may further include a conductive material.

On the other hand, according to another aspect of the present disclosure, there is provided an electrode for rechargeable battery, comprising the above-mentioned electrode mixture for rechargeable battery; and an electrode current collector.

On the other hand, according to yet another aspect of the present disclosure, there is provided a rechargeable battery, comprising the above-mentioned electrode for rechargeable battery.

As used herein, the terms "a first," "a second," etc. are used herein to explain various constitutional elements, and these terms are used only to distinguish one constitutional element from another constitutional element.

The technical terms used herein is only to explain exemplary embodiments and is not intended to limit the scope of the present disclosure.

The singular forms "a," "an" and "the" are intended to include plural forms, unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Also, as used herein, in case a layer or an element is mentioned to be formed "on" or "above" layers or elements, it means that the layer or element is directly formed on the layers or elements, or it means that other layers or elements may be additionally formed between the layers, on a subject, or on a substrate.

Although the present disclosure may have various forms and various modifications may be made thereto, specific examples will be exemplified and explained in detail below. However, it is not intended to limit the present disclosure to specific disclosure, and it should be understood that the present disclosure includes all the modifications, equivalents or replacements thereof without departing from the spirit and technical scope of the present disclosure.

Now, the present disclosure will be described in more detail.

First, according to one aspect of the present disclosure, there is provided an electrode binder composition for rechargeable battery, comprising an emulsified polymer particle having a core-shell structure, wherein the emulsified polymer particle satisfies the following Relational Expression 1, and has a surface acidity value of 0.15 to 2.0 mmol/g.

[Relational Expression 1]

AC-Core < AC-Shell

in Relational Expression 1, AC-Core is the relative content (wt%) of a repeating unit derived from an unsaturated carboxylic acid-based monomer in a core of the emulsified polymer particle, and AC-Shell is the relative content (wt%) of a repeating unit derived from an unsaturated carboxylic acid-based monomer in a shell of the emulsified polymer particle.

The present inventors have found that in an electrode binder composition for rechargeable battery containing an emulsion of emulsified polymer particles (latex particles) produced by emulsion polymerization of an acrylate-based monomer or the like, when the latex particles are produced in a core-shell structure and the amount of the unsaturated carboxylic acid-based monomer used is adjusted in the production process of each of the core and the shell to satisfy the above-mentioned Relational Expression 1, the adhesive strength of the binder is greatly improved, so that deintercalation between the electrode active materials or between the electrode active material and the current collector can be prevented, and the stable binding can be realized, thereby completing the present disclosure.

The electrode binder composition for rechargeable battery according to an embodiment of the present disclosure includes emulsified polymer particles of a specific monomer, that is, latex particles, and each monomer may be present in the form of repeating units derived from the monomer within each latex particle.

**Monomer**

First, the latex particle can consist of a core-shell structure as described above, and such a latex particle can be prepared by separately performing a first polymerization step for forming a core and a second polymerization step for forming a shell. At this time, it may be preferable that the core and the shell are composed of different components from each other, considering the particle stability and characteristics as a battery binder described later.

**Core**

A conjugated diene-based monomer is used in the first emulsion polymerization for producing the core of the latex particle, whereby the core of the latex particle contains a repeating unit derived from the conjugated diene-based monomer.

When such a conjugated diene-based monomer is contained as a component of latex particles, the binder prepared therefrom can suppress a swelling phenomenon of an electrolyte solution at high temperature, have elasticity due to the rubber component, reduce the thickness of the electrode and reduce a gas generation phenomenon, and further can play a role in improving the adhesive strength so that the binding force between the electrode active material and the current collector can be maintained.

A typical example of the conjugated diene-based monomer may be at least one selected from the group consisting of 1,3-butadiene, isoprene, chloroprene and piperylene, preferably 1,3-butadiene.

Further, in the first emulsion polymerization for preparing the core of the latex particle, an aromatic vinyl-based monomer can be further used, whereby the latex particle may further include a repeating unit derived from the aromatic vinyl-based monomer.

The aromatic vinyl-based monomer may include at least one monomer selected from the group consisting of styrene, α-methylstyrene, β-methylstyrene, p-t-butylstyrene, chlorostyrene, vinyl benzoic acid, vinyl benzoic acid methyl ester, vinyl naphthalene, chloromethylstyrene, hydroxymethylstyrene and divinylbenzene, and preferably, it may be styrene.

In this case, the core of the emulsified polymer particle may contain about 50 to about 100 parts by weight of the repeating unit derived from the aromatic vinyl-based monomer based on 100 parts by weight of the repeating unit derived from the conjugated diene-based monomer, the lower limit thereof may be about 50 parts by weight or more, or about 60 parts by weight or more, or about 65 parts by weight or more, and the upper limit thereof may be about 100 parts by weight or less, or about 90 parts by weight or less, or about 80 parts by weight or less.

Further, in the first emulsion polymerization for producing the core of the latex particles, an alkyl (meth) acrylate-based monomer may be further used, whereby the core of the latex particle may further include a repeating unit derived from an alkyl (meth)acrylate-based monomer.

When an alkyl (meth) acrylate-based monomer is used, the manufactured electrode features a relatively high degree of swelling, whereby the resistance of the electrode can be reduced and the ionic conductivity can be increased.

The alkyl (meth) acrylate-based monomer may include at least one selected from the group consisting of methyl acrylate, ethyl acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, lauryl acrylate, cetyl acrylate, stearyl acrylate, lauryl methacrylate, cetyl methacrylate, and stearyl methacrylate.

Further, the core of the emulsified polymer particle may contain about 5 to about 50 parts by weight of the repeating unit derived from the alkyl (meth)acrylate-based monomer based on 100 parts by weight of the repeating unit derived from the conjugated diene-based monomer, the lower limit thereof may be about 5 parts by weight or more, or about 10 parts by weight or more, or about 15 parts by weight or more, and the upper limit thereof may be about 50 parts by weight or less, or about 40 parts by weight or less, or about 30 parts by weight or less.

Further, in the first emulsion polymerization for producing the core of the latex particles, an unsaturated carboxylic acid-based monomer may be further used, whereby the core of the latex particles may further include a repeating unit derived from an unsaturated carboxylic acid-based monomer.

The unsaturated carboxylic acid-based monomer may include at least one selected from the group consisting of acrylic acid, methacrylic acid, maleic acid, fumaric acid, glutaric acid, itaconic acid, tetrahydrophthalic acid, crotonic acid, isocrotonic acid, and nadic acid.

Further, the core of the emulsified polymer particle may contain about 1 to about 20 parts by weight of the repeating unit derived from the unsaturated carboxylic acid-based monomer based on 100 parts by weight of the repeating unit derived from the conjugated diene-based monomer, the lower limit thereof may be about 1 parts by weight or more, or about 5 parts by weight or more, or about 8 parts by weight or more, and the upper limit thereof may be about 20 parts by weight or less, or about 15 parts by weight or less, or about 12 parts by weight or less.

When the unsaturated carboxylic acid-based monomer is used in an excessively large amount, there may be a problem that the generation of coagulum increases during polymerization process, and when the unsaturated carboxylic acid-based monomer is used in an excessively small amount, there may be a problem that the electrolyte solution uptake of the binder to be manufactured later increases.

In addition, in the emulsion polymerization for producing the latex particles, a hydroxyalkyl (meth)acrylate-based monomer may be further used, whereby the latex particles may include a repeating unit derived from these monomers.

### Shell

In the second emulsion polymerization for producing the shell of the latex particles, an alkyl (meth) acrylate-based monomer is used, whereby the shell of the latex particle includes a repeating unit derived from an alkyl (meth)acrylate-based monomer.

The specific contents of the alkyl (meth) acrylate-based monomer are the same as described above.

Further, in the second emulsion polymerization for producing the shell of the latex particles, an unsaturated carboxylic acid-based monomer may be further used, whereby the shell of the latex particle may further include a repeating unit derived from an unsaturated carboxylic acid-based monomer.

The specific contents of the unsaturated carboxylic acid-based monomer are the same as described above.

Further, the shell of the emulsified polymer particle may contain about 5 to about 100 parts by weight of the repeating unit derived from the unsaturated carboxylic acid-based monomer based on 100 parts by weight of the alkyl (meth)acrylate-based repeating unit, the lower limit thereof may be 5 parts by weight or more, or about 10 parts by weight or more, or about 12 parts by weight or more, and the upper limit thereof may be about 100 parts by weight or less, or about 80 parts by weight or less, or about 70 parts by weight or less.

When the unsaturated carboxylic acid-based monomer is used in an excessively large amount, there may be a problem that the generation of coagulum increases during polymerization process, and when the unsaturated carboxylic acid-based monomer is used in an excessively small amount, there may be a problem that the electrolyte solution uptake of the binder to be manufactured later increases.

Further, an aromatic vinyl-based monomer may be further used in the second emulsion polymerization for producing the shell of the latex particles, whereby the shell of the latex particle may further include a repeating unit derived from an aromatic vinyl-based monomer.

The specific contents of the aromatic vinyl-based monomer are the same as described above.

In this case, the shell of the emulsified polymer particle may optionally further contain about 5 to about 70 parts by weight of the repeating unit derived from the aromatic vinyl-based monomer based on 100 parts by weight of the alkyl (meth)acrylate-based repeating unit. The lower limit thereof may be about 5 parts by weight or more, or about 10 parts by weight or more, or about 15 parts by weight or more, and the upper limit thereof may be about 70 parts by weight or less, or about 50 parts by weight or less, or about 40 parts by weight or less.

In addition, a crosslinking agent may be further used in the second emulsion polymerization for producing the shell of the latex particles, whereby the shell of the emulsified polymer particle may include a crosslinking bond formed by a crosslinking agent.

Such a crosslinking agent may be a compound containing both an acryloyl group and an ethylenically unsaturated bond in a molecule, and more specifically, may include allyl (meth)acrylate and the like.

As such a crosslinking agent is used, the stability of the particles in the shell of the latex particles produced may be higher.

When the crosslinking agent is used, it may be used in an amount of about 0.01 to about 5 parts by weight, or about 0.05 to about 1 part by weight, based on 100 parts by weight of a total of the monomer components included in the shell.

### Emulsion polymerization

Such a latex particle may be produced by a commonly known emulsion polymerization method, and is produced in the form of core-shell as described above. In order to produce the latex particle in a core-shell form, the emulsion polymerization can proceed at least twice by a first emulsion polymerization for forming a core and a second emulsion polymerization for forming a shell wrapping the outer surface of the core.

At this time, in each of the first and second emulsion polymerizations, the polymerization temperature and the polymerization time may be appropriately determined depending on the case. For example, the polymerization temperature may be from about 50°C to about 200°C, or from about 50°C to about 100°C, and the polymerization time may be from about 0.5 hours to about 20 hours, or from about 1 to about 10 hours.

An inorganic or organic peroxide may be used as a polymerization initiator usable during the emulsion polymerization. For example, a water-soluble initiator including potassium persulfate, sodium persulfate, ammonium persulfate, and the like, and an oil-soluble initiator including cumene hydroperoxide, benzoyl peroxide, and the like can be used.

Further, an activator may be further included together with the polymerization initiator in order to accelerate the reaction initiation of the peroxide. As the activator, at least one selected from the group consisting of sodium formaldehyde sulfoxylate, sodium ethylenediaminetetraacetate, ferrous sulfate, and dextrose can be used.

The emulsifier used in the emulsion polymerization may include at least one emulsifier selected from the group consisting of anionic emulsifiers, cationic emulsifiers, and nonionic emulsifiers.

Such an emulsifier is a material having both a hydrophilic group and a hydrophobic group, forms a micelle structure during the emulsion polymerization process, and enables polymerization of each monomer to occur inside the micellar structure.

An emulsifier commonly used in emulsion polymerization can be divided into an anionic emulsifier, a cationic emulsifier, a nonionic emulsifier and the like, but two or more kinds may be mixed with each other and used from the viewpoint of polymerization stability in emulsion polymerization.

Specifically, in the case of the anionic emulsifier, sodium dodecyl diphenyl ether disulfonate, sodium polyoxyethylene alkyl ether sulfate, sodium lauryl sulfate, sodium dodecyl benzene sulfonate, dioctyl sodium sulfosuccinate, and the like can be mentioned.

And, the nonionic emulsifier may be a polyethylene oxide alkyl aryl ether, a polyethylene oxide alkyl amine, or a polyethylene oxide alkyl ester, and these can be used alone or in combination of two or more, and when these are used in combination of an anionic emulsifier and a non-ionic emulsifier, it may be more effective, but the present disclosure is not necessarily limited to the type of such emulsifiers.

Further, the emulsifier may be used, for example, in an amount of about 0.01 to about 10 parts by weight, about 0.05 to about 10 parts by weight, or about 0.05 to about 7 parts by weight, or about 0.1 to about 5 parts by weight, based on 100 parts by weight of a total of the monomer components used in the preparation of the latex particle.

When the emulsifier is used in an excessively large amount, the particle size of the latex particles becomes small, which may cause a problem that the adhesive strength of the electrode binder is lowered. When the emulsifier is used in an excessively small amount, there may be a problem that the stability of polymerization may be lowered in the emulsion polymerization reaction, and the stability of the resulting latex particles may also be lowered.

On the other hand, as described above, the latex particle contained in the binder composition for a rechargeable battery according to an aspect of the present disclosure has a core-shell structure, and satisfy the following Relational

Expression 1.

[Relational Expression 1]

AC-Core < AC-Shell

in Relational Expression 1, AC-Core is the relative content (wt%) of a repeating unit derived from an unsaturated carboxylic acid-based monomer in a core of the emulsified polymer particle, and AC-Shell is the relative content (wt%) of a repeating unit derived from an unsaturated carboxylic acid-based monomer in a shell of the emulsified polymer particle.

That is, the latex particle contained in the electrode binder composition for rechargeable battery according to an aspect of the present disclosure has a feature that the contents (wt%) of the repeating units derived from the unsaturated carboxylic acid-based monomers in each of the core and shell of the emulsified polymer particle are different from each other, and that the relative content (wt%) of the repeating unit derived from the unsaturated carboxylic acid-based monomer in the shell, that is, the ratio of the repeating unit derived from the unsaturated carboxylic acid-based monomer to the total repeating unit derived from the monomer contained in the shell is larger than the relative content (wt%) of the repeating units derived from the unsaturated carboxylic acid-based monomer in the core, that is, the ratio of the repeating unit derived from the unsaturated carboxylic acid-based monomer to the total repeating unit derived from the monomer contained in the core.

More specifically, the binder composition for rechargeable battery may satisfy the following Relational Expression 2.

[Relational Expression 2]

$2 \times$ AC-Core < AC-Shell

in Relational Expression 2, AC-Core is the relative content (wt%) of a repeating unit derived from an unsaturated carboxylic acid-based monomer in a core of the emulsified polymer particle, and AC-Shell is the relative content (wt%) of a repeating unit derived from an unsaturated carboxylic acid-based monomer in a shell of the emulsified polymer particle.

That is, the latex particle contained in the binder composition for rechargeable battery according to an embodiment of the present disclosure has a feature that the relative content (wt%) of the repeating unit derived from the unsaturated carboxylic acid-based monomer in the shell, that is, the ratio of the repeating units derived from the unsaturated carboxylic acid-based monomer to the total repeating units derived from the monomers contained in the shell is at least twice larger than the relative content (wt%) of the repeating unit derived from the unsaturated carboxylic acid-based monomer in the core, that is, the ratio of the repeating unit derived from the unsaturated carboxylic acid-based monomer to the total repeating unit derived from the monomer contained in the core.

The unsaturated carboxylic acid-based monomer features a high polarity due to the presence of a carboxyl group. When such an unsaturated carboxylic acid-based monomer is used as a binder component, it is possible to prevent the bond between the electrode and the electrolytic solution on the surface of the produced binder and thus realize the effect of suppressing the expansion of the electrode.

However, when the emulsion polymerization proceeds with a high content of such a polar monomer, there is a problem that the generation of coagulum increases due to the difference in the polymerization rate between the respective monomers, which makes it difficult to control the polymerization reaction.

However, according to an embodiment of the present disclosure, a core-shell type is produced by two polymerizations, and a relatively small amount of an unsaturated carboxylic acid-based monomer is used in the first polymerization to stably form the core of the latex particle, while in the second polymerization, a relatively large amount of an unsaturated carboxylic acid-based monomer is used to increase the proportion of carboxyl groups on the particle surface, thereby realizing the above-mentioned advantageous effect.

Therefore, in order to produce the latex particle having such a core-shell structure, it is necessary to adjust the amount of each monomer used during the first and second emulsion polymerization.

For example, the amount of the total monomers used in the first emulsion polymerization, that is, the amount of the conjugated diene-based monomer, the alkyl (meth)acrylate-based monomer, the aromatic vinyl-based monomer, and the unsaturated carboxylic acid-based monomer is directly reflected in the repeating unit content of each latex particle core, unless there are special circumstances. Therefore, the relative content of each repeating unit in the core of the latex particle can be adjusted by the relative amount of each monomer.

Specifically, ii) the relative usage amount (wt%) of the unsaturated carboxylic acid monomer in the total monomers used in the second emulsion polymerization to form a shell, i.e., in the alkyl (meth) acrylate monomer, the aromatic vinyl-based monomer, and the unsaturated carboxylic acid-based monomer may be adjusted so as to be greater than i) the relative usage amount (wt%) of the unsaturated carboxylic acid-based monomer in the entire monomers used in the first emulsion polymerization to form a core, i.e., in a conjugated diene-based monomer, an alkyl (meth)acrylate-based monomer, an aromatic vinyl-based monomer, and an unsaturated carboxylic acid-based monomer.

More preferably, ii) the relative usage amount (wt%) of the unsaturated carboxylic acid monomer in the total monomers used in the second emulsion polymerization to form a shell, i.e., in the alkyl (meth)acrylate monomer, the aromatic vinyl-based monomer, and the unsaturated carboxylic acid-based monomer may be adjusted so as to be at least twice greater than i) the relative usage amount (wt%) of the unsaturated carboxylic acid-based monomer in the entire monomers used in the first emulsion polymerization to make the core, i.e., in a conjugated diene-based monomer, an alkyl (meth)acrylate-based monomer, an aromatic vinyl-based monomer, and an unsaturated carboxylic acid-based monomer.

Further, the weight ratio of the core to the shell in the latex particle may be formed in a ratio of about 8:2 to about 6:4.

Further, the intensity average particle size (Di) of the latex particle may be about 50 to about 200 nm.

Due to the adjustment of the usage amount of monomer as described above, the relative content (wt%) of the repeating unit derived from the unsaturated carboxylic acid-based monomer in the emulsified polymer particles, i.e., in the entire core and shell of the emulsified polymer particle may be about 1 to about 20% by weight, or about 1% by weight or more, or about 3% by weight or more, or about 5% by weight or more, or about 9% by weight or more, and about 20% by weight or less, or about 17% by weight or less, or about 15% by weight or less.

According to one embodiment of the present disclosure, the weight ratio of the repeating unit derived from the unsaturated carboxylic acid-based monomer present on the surface of the emulsified polymer particle relative to the total weight of the emulsified polymer particle may be about 2% by weight or more, preferably about 2.5% by weight or more, or about 3% by weight or more, and about 20% by weight or less, or about 17% by weight or less, or about 15% by weight or less.

The weight ratio of the repeating unit derived from the unsaturated carboxylic acid-based monomer present on the surface of the emulsified polymer particle relative to the total weight of the emulsified polymer particle can be derived by measuring the change in electrical conductivity value while dropwise adding an aqueous base solution using a direct conductometric titration, calculating the number of moles of carboxyl groups distributed on the surface of the latex particle, calculating the weight of the repeating unit derived from the unsaturated carboxylic acid-based monomer distributed on the surface of the latex particle therefrom, and then calculating the same as a % ratio (wt%) to the total weight of the latex particle containing the core and shell.

The above ratio represents the ratio of the repeating unit derived from the unsaturated carboxylic acid-based monomer located on the surface of the actual emulsified polymer particle, and therefore may differ from the ratio of the unsaturated carboxylic acid-based monomer used for the core polymerization or shell polymerization of the emulsified polymer particle. In practice, it is significant in that it can represent the ratio of the repeating unit derived from the surface unsaturated carboxylic acid-based monomer that can change the surface properties of the latex particle.

Specifically, in the case of the emulsified polymer particle that do not have a core-shell structure, acid-based monomers with high polarity can be concentrated the interface between the polymer and the polymerization solution such as water in the emulsion polymerization process. Therefore, considering the amount of the unsaturated carboxylic acid-based monomer actually charged into the emulsion polymerization, the repeating unit derived from the unsaturated carboxylic acid-based monomer are located on the surface of the emulsified polymer in a higher ratio than expected therefrom, so that it has a value different from that of the core-shell emulsified polymer particles as in the present disclosure.

When the weight ratio of the repeating unit derived from the unsaturated carboxylic acid-based monomer present on the surface of the emulsified polymer particle is too high, there may be a problem that a coagulum may occur and the electrolyte solution uptake is increased. When the weight ratio of the repeating unit derived from the unsaturated carboxylic acid-based monomer present on the surface of the emulsified polymer particles is too low, there may be a problem that the stability of the emulsified polymer particle may be lowered, and the particles in the electrolyte solution may be disintegrated.

According to an embodiment of the present disclosure, the emulsified polymer particle may have a relative content of the repeating unit derived from an unsaturated carboxylic acid-based monomer to the total weight including the core and shell of about 5 wt% or more, preferably about 6 wt% or more, or about 20 wt% or less, or about 15 wt% or less.

When the total content of the repeating unit derived from the unsaturated carboxylic acid-based monomer is too small or too large, there may be a problem that the uptake of the electrolyte solution is increased, and the shape of the particles is not maintained in the electrolyte solution.

The emulsified polymer particle may have a surface acidity value of about 0.15 to about 2.0 mmol/g, or about 0.15 mmol/g or more, or about 0.2 mmol/g or more, or about 0.3 mmol/g or more, or about 2.0 mmol/g or less, or about 1.5 mmol/g or less.

If the surface acidity value is too low or too high, there may be a problem that the uptake of the electrolyte solution is increased.

Further, the electrode binder composition for rechargeable battery may have an electrolyte solution uptake of about 200% or less. Here, the electrolyte solution uptake refers to an increase in the volume of a dry film when the electrode binder composition is prepared in the form of a dry film and then impregnated in the electrolyte solution at about 25°C for about 48 hours. At this time, the electrolyte solution may be an alkylene carbonate-based electrolyte solution, and more specifically, it may be a mixed electrolyte solution of ethylene carbonate / propylene carbonate / propyl propionate (mixing volume ratio of EC/PC/PP = 3/1/6).

For the electrolyte solution uptake, specifically, the lower limit thereof may be about 1% or more, or about 10% or more, or about 30% or more, and the upper limit thereof may be about 200% or less, or about 170% or less, or about 150% or less, or about 100% or less, or about 70% or less, which may show a relatively low electrolyte impregnation property.

**Solvent**

According to an embodiment of the present disclosure, the electrode binder composition for rechargeable battery may further include a solvent in addition to the above-mentioned emulsified polymer particle, that is, a latex particle.

The solvent or material used as a dispersion medium is not particularly limited, but examples thereof may include water; alcohols such as methanol, ethanol, propanol, isopropanol, butanol, isobutanol, pentanol, isopentanol, and hexanol; ketones such as acetone, methyl ethyl ketone, methyl propyl ketone, cyclopentanone, and cyclohexanone; ethers such as methyl ethyl ether, diethyl ether, dipropyl ether, diisopropyl ether, dibutyl ether, diisobutyl ether, di-n-amyl ether, diisoamyl ether, methyl propyl ether, methyl isopropyl ether, methyl butyl ether, ethyl isoamyl ether, and tetrahydrofuran; lactones such as $\gamma$-butyrolactone and $\delta$-butyrolactone; lactams such as $\beta$-lactam; cyclic aliphatics such as cyclopentane, cyclohexane, and cycloheptane; aromatic hydrocarbons such as benzene, toluene, o-xylene, m-xylene, p-xylene, ethylbenzene, propylbenzene, isopropylbenzene, and butylbenzene; aliphatic hydrocarbons such as heptane, octane, nonane, and decane; chain and cyclic amides such as dimethylformamide and N-methylpyrrolidone; esters such as methyl lactate, ethyl lactate, propyl lactate, butyl lactate, and methyl benzoate; and the like. However, among these, it is preferable in view of the process to use a dispersion medium having a boiling point of 80°C or more, preferably 85°C or more.

In this case, the solvent may be used in an amount of about 50 to about 1,000 parts by weight, preferably about 100 to about 300 parts by weight, based on 100 parts by weight of the latex particles, from the viewpoint of stability and viscosity adjustment of the latex particle, and for example, based on the total amount of the binder composition, the solvent can be used so that the total solid content (TSC) is adjusted to about 5 to about 70% by weight.

If the solvent is used in an excessively small amount, there may be a problem that the stability of the latex particles is lowered, and if the solvent is used in an excessive amount, the viscosity is lowered, and the coating properties may be weakened, which may cause a problem that the overall performance of the battery is deteriorated.

**Electrode mixture and Electrode**

Meanwhile, according to yet another aspect of the present disclosure, there is provided an electrode mixture for rechargeable battery, comprising the above-mentioned electrode binder composition for rechargeable battery and an electrode active material.

Further, according to yet another aspect of the present disclosure, there is provided an electrode for rechargeable battery, comprising an electrode mixture layer containing the electrode mixture for rechargeable battery; and an electrode current collector.

Except for the above-mentioned binder, an electrode active material, an electrode current collector and the like used in the electrode mixture and the electrode of the present disclosure may each include generally known components.

For example, the electrode mixture may be used in the manufacture of the negative electrode. That is, the electrode mixture may be a negative electrode mixture, and the electrode active material may be a negative electrode active material.

Here, the binder may be contained in an amount of 1% by weight to 10% by weight, specifically 1% by weight to 5% by weight, based on the total weight (100% by weight) of the negative electrode mixture. When this is satisfied, the content of the negative active material can be relatively increased, and the discharge capacity of the electrode can be further improved.

On the other hand, the binder has excellent properties in terms of binding force and mechanical properties. Therefore, not only when a graphite-based negative active material is used as the negative electrode active material of the negative electrode mixture, but also when a negative electrode active material having a higher capacity than that is used, the binder can maintain the binding force between the negative electrode active material and the negative electrode active material, and between the negative electrode active material and the negative electrode current collector, and can suppress the expansion of the negative active material by its own mechanical properties.

As described above, since the binder is suitable not only for the graphite-based negative active material but also for the negative active material having a higher capacity than that, the type of the negative active material is not particularly limited in one embodiment of the present disclosure.

Specifically, the negative active material may include, for example, carbon and graphite materials such as natural graphite, artificial graphite, carbon fiber, and non-graphitizable carbon; metals such as Al, Si, Sn, Ag, Bi, Mg, Zn, In, Ge, Pb, Pd, Pt, Ti and the like capable of alloying with lithium and compounds containing these elements; composites of metals and their compounds with carbon and graphite materials; lithium-containing nitride; titanium oxide; lithium titanium oxide; and the like, without being limited thereto. Among them, a carbon-based active material, a silicon-based active material, a tin-based active material, or a silicon-carbon-based active material is more preferable, and these may be used alone or in combination of two or more.

Here, the carbon-based active material includes at least one material selected from the group consisting of previously exemplified natural graphite, artificial graphite, kish graphite, pyrolytic carbon, mesophase pitches, mesophase pitch-based carbon fiber, meso-carbon microbeads, petroleum or coal-derived cokes, soft carbon, and hard carbon. And, the silicon-based active material may include a compound containing Si, i.e., Si, Si-C composite, $SiOx$ ($0<x<2$), the Si-Q alloy, mixtures thereof, or a mixture of at least one of these and $SiO_2$.

The negative electrode current collector is generally fabricated to a thickness of 3 to 500 $\mu$m. The negative electrode current collector is not particularly limited so long as it has high conductivity without causing chemical changes in the corresponding battery. For example, the negative electrode current collector may be made of copper, stainless steel, aluminum, nickel, titanium, baked carbon, or a material formed by surface-treating g a surface of copper or stainless steel with carbon, nickel, titanium, silver, or the like, or may use an aluminum-cadmium alloy or the like. In addition, similar to the positive electrode current collector, the negative electrode current collector may have fine protrusions and depressions formed on a surface thereof to enhance adherence of a negative electrode active material, and may be formed in various forms such as a film, a sheet, a foil, a net, a porous body, a foaming body, and a non-woven fabric structure.

The negative electrode is manufactured by coating an electrode mixture including a negative electrode active material and the binder onto a negative electrode current collector, drying and rolling it, and, if necessary, may be manufactured by further adding a conductive material, a filler, and the like.

The conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon nanotube, carbon fiber and metal fiber; metal powders such as carbon fluoride powder, aluminum powder, and nickel powder; conductive whiskey such as zinc oxide and potassium titanate; conductive metal oxides such as titanium oxide; conductive materials such as polyphenylene derivatives may be used.

The filler is optionally used as a component for suppressing the expansion of the negative electrode, and is not particularly limited as long as it is a fibrous material without causing a chemical change in the corresponding battery. For example, an olefin-based polymerization agent, such as polyethylene and polypropylene; a fibrous material such as glass fiber or carbon fiber may be used.

On the other hand, the electrode mixture is not limited to the negative electrode, and can be used for manufacturing the positive electrode. That is, the electrode mixture may be a positive electrode mixture, and the electrode active material may be a positive electrode active material.

The positive electrode active material may be, for example, a layered compound such as lithium cobalt oxide ($LiCoO_2$) or lithium nickel oxide ($LiNiO_2$) or a compound substituted with one or more transition metals; lithium manganese oxides such as chemical formula $Li_{1+x}Mn_{2-x}O_4$ (where, x is 0 to 0.33), $LiMnO_3$, $LiMn_2O_3$, $LiMnO_2$; lithium copper oxide ($Li_2CuO_2$); vanadium oxides such as $LiV_3O_8$, $LiFe_3O_4$, $V_2O_5$, and $Cu_2V_2O_7$; lithium iron phosphate type represented by chemical formula $Li_{1+a}Fe_{1-x}M_xPO_{4-b}A_b$ (where, M is any one or more selected from the group consisting of Mn, Ni, Co, Cu, Sc, Ti, Cr, V and Zn, A is any one or more selected from the group consisting of S, Se, F, Cl and I, $-0.5<a<0.5$, $0\leq x<0.5$, $0\leq b\leq 0.1$); a Ni-site type lithium nickel oxide represented by chemical formula $LiNi_{1-x}M_xO_2$ (where, M = Co, Mn, Al, Cu, Fe, Mg, B or Ga, and x= 0.01 to 0.3); lithium manganese composite oxide represented by chemical formula $LiMn_{2-x}M_xO_2$ (where, M = Co, Ni, Fe, Cr, Zn or Ta, and x = 0.01 to 0.1) or $Li_2Mn_3MO_8$ (where, M = Fe, Co, Ni, Cu or Zn) or lithium manganese composite oxide having a spinel structure represented by chemical formula $LiNi_xMn_{2-x}O_4$; lithium-nickel-manganese-cobalt-based oxide represented by chemical formula $Li(Ni_pCo_qMn_{r1})O_2$ (where, $0<p<1$, $0<q<1$, $0<r1<1$, $p+q+r1=1$), or lithium-nickel-manganese-cobalt-based oxide represented by chemical formula $Li(Ni_{p1}Co_{q1}Mn_{r2})O_4$ (where, $0<p1<2$, $0<q1<2$, $0<r2<2$, $p1+q1+r2=2$), or a lithium-nickel-cobalt-transition metal (M) oxide represented by chemical formula $Li(Ni_{p2}Co_{q2}Mn_{r3}M_{s2})O_2$ (where, M is selected from the group consisting of Al, Fe, V, Cr, Ti, Ta, Mg and Mo, and p2, q2, r3 and s2 are each independent atomic fractions of elements, $0<p2<1$, $0<q2<1$, $0<r3<1$, $0<s2<1$, $p2+q2+r3+s2=1$), or the like, without being limited thereto.

The positive electrode current collector is typically fabricated to a thickness of 3 to 500 μm. The positive electrode current collector is not particularly limited as long as a corresponding battery has high conductivity without causing a chemical change in the battery, and for example, may be formed of stainless steel, aluminum, nickel, titanium, baked carbon, or aluminum, or a material formed by surface-treating a surface of stainless steel with carbon, nickel, titanium, silver, or the like. The current collector may have fine protrusions and depressions formed on a surface thereof to enhance adherence of a positive electrode active material, and may be formed in various forms such as a film, a sheet, a foil, a net, a porous body, a foaming body, and a non-woven fabric structure.

Among the negative electrode and the positive electrode, a generally known binder may be used for the electrode in which the above-mentioned binder is not used. As a typical example thereof may include polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, without being limited thereto.

The negative electrode and the positive electrode may be respectively manufactured by mixing an active material and a binder, and optionally, a conductive material, a filler and the like in a solvent to prepare a slurry-like electrode mixture, and applying this electrode mixture onto each electrode current collector. Since the method for manufacturing such an electrode is widely known in the art, a detailed description thereof is omitted herein.

**Battery**

On the other hand, according to yet another aspect of the present disclosure, there is provided a rechargeable battery, comprising the electrode for rechargeable battery. Such a battery may specifically in the form including a positive electrode, an electrolyte, and a negative electrode.

The rechargeable battery can be implemented as a lithium rechargeable battery.

The lithium rechargeable battery can be manufactured by impregnating an electrode assembly including a positive electrode, a separator, and a negative electrode with a non-aqueous electrolyte.

The positive electrode and the negative electrode are the same as described above.

Specifically, the negative electrode may include at least one negative electrode active material selected from the group consisting of a carbonaceous material and a silicon compound.

The separator separates the negative electrode and the positive electrode, and provides a passage for moving lithium ions. That is, those having low resistance to ion movement of the electrolyte and having excellent electrolyte-moisturizing capability can be used. For example, the separator may be selected from glass fiber, polyester, Teflon, polyethylene, polypropylene, polytetrafluoroethylene (PTFE) or a combination thereof, and it may be in the form of non-woven fabric or woven fabric. For example, polyolefin-based polymer separators such as polyethylene and polypropylene are mainly used for lithium ion batteries. A coated separator containing a ceramic component or a polymer material may be used to secure heat resistance or mechanical strength. Optionally, it may be used in a single-layer or multi-layer structure.

In some cases, a gel polymer electrolyte can be coated onto the separator to increase battery stability. Typical examples of such a gel polymer include polyethylene oxide, polyvinylidene fluoride, polyacrylonitrile, and the like.

However, when a solid electrolyte other than the non-aqueous electrolyte is used, the solid electrolyte can also serve as a separator.

The non-aqueous electrolyte may be a liquid electrolyte containing a non-aqueous organic solvent and a lithium salt. The non-aqueous organic solvent functions as a medium through which ions involved in the electrochemical reaction of the battery can move.

As the non-aqueous electrolyte, a non-aqueous electrolyte, an organic solid electrolyte, an inorganic solid electrolyte, and the like are used.

As the non-aqueous electrolyte, for example, an aprotic organic solvent, such as N-methyl-2-pyrrolidinone, propylene carbonate, ethylene carbonate, butylene carbonate, dimethyl carbonate, diethyl carbonate, ethylmethyl carbonate, gamma-butylolactone, 1,2-dimethoxy ethane, 1,2-diethoxy ethane, tetrahydrofuran, 2-methyl tetrahydrofuran, dimethyl sulfoxide, 1,3-dioxolane, 4-methyl-1,3-dioxane, diethyl ether, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl pyropionate, ethyl propionate, and the like can be used.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

Examples of the inorganic solid electrolyte include nitrides, halides and sulfates of lithium (Li) such as $Li_3N$, $LiI$, $Li_5NI_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$.

The lithium salt is a material readily soluble in the non-aqueous electrolyte, for example, LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiAlCl$_4$, CH$_3$SO$_3$Li, CF$_3$SO$_3$Li, LiSCN, LiC(CF$_3$SO$_2$)$_3$, (CF$_3$SO$_2$)$_2$NLi, lithium chloroborane, lithium lower aliphatic carboxylate, lithium tetraphenyl borate, and the like can be used.

In addition, in order to improve charge and discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the electrolyte solution. In some cases, in order to impart incombustibility, the electrolyte solution may further include halogen-containing solvents, such as carbon tetrachloride and ethylene trifluoride. Furthermore, in order to improve high-temperature retention characteristics, the electrolyte solution may further include carbon dioxide gas. In addition, it may further include fluoroethylene carbonate (FEC), propene sultone (PRS), fluoro-propylene carbonate (FPC), and the like.

The lithium rechargeable battery according to the present disclosure not only can be used for a battery cell used as a power source for a small device, but also can be used as a unit battery for a medium and large-sized battery module including a plurality of battery cells.

**[Advantageous Effects]**

The electrode binder composition for rechargeable battery of the present disclosure can maintain a structural stability of the electrode even in repeated charge and discharge cycles, while having excellent properties in terms of a binding force, a mechanical property or the like, thereby improving the overall performance of the rechargeable battery.

**[DETAILED DESCRIPTION OF THE EMBODIMENTS]**

Hereinafter, the actions and effects of the present invention will be described in more detail with reference to the specific exemplary embodiments of the present invention. However, these exemplary embodiments are for illustrative purposes only, and the scope of the present invention is not intended to be limited thereby.

< Example 1>

**Determination of coagulum content**

The coagulum content of the electrode binders obtained in Examples and Comparative Examples was measured by the following method.

300 g of water was added to 100 g of the electrode binder obtained in the following Examples and Comparative Examples, and the head was fixed to be immersed in the electrode binder using a mixer (Eurostar 40, manufactured by IKA), and then sheared at 150 rpm for about 10 minutes, which was taken out, filtered through a 200 mesh sieve, and the amount of coagulum remaining on the sieve was measured.

The content of the measured coagulum was calculated in ppm units based on the weight of the electrode binder to be measured.

Generally, it is evaluated as excellent if the content of coagulum before neutralization is less than 1000 ppm, and if the content of coagulum after neutralization is less than 100 ppm.

**Measurement of electrolyte solution uptake**

The electrolyte solution uptake of the electrode binders obtained in the following Examples and Comparative Examples was measured by the following method.

20 g of the binder obtained in the following Examples and Comparative Examples was taken and coated onto the surface of a square mold subjected to the release treatment, which was sequentially dried at 25°C for 24 hours and at 80°C for 24 hours, and then peeled off to produce a film. The specimen was cut in a rectangular shape with a long horizontal length, and the correct horizontal length was measured. (Ma)

The film for which the length measurement was completed was immersed in about 15 g of electrolyte solution at 25°C for 48 hours, and then the horizontal length of the immersed specimen was measured. (Mb)

At this time, the electrolyte solution was prepared by mixing ethylene carbonate / propylene carbonate / propyl propionate (mixed volume ratio of EC / PC / PP = 3/1/6).

The electrolyte solution uptake was calculated according to the following Equation 1.

[Equation 1]

$$\text{Electrolyte solution uptake } (\%) = ((M_b/M_a)^3 - 1) * 100$$

**Measurement of particle size**

0.02 g of the binder obtained in the following Examples and Comparative Examples was added and diluted in 20 g of distilled water, and then the intensity average particle size (Di) value was measured using a particle size analyzer (NICOMP 380, Entegris).

**Preparation of emulsified polymer particle with core-shell structure**

**Example 1:**

**Preparation Example 1: First polymerization (core formation)**

As a monomer for forming the core, 50 g of 1,3-butadiene, 35 g of styrene, 10 g of methyl methacrylate, and 5 g of a mixture of acrylic acid and itaconic acid in a ratio of 5:5 were used.

As a solvent, about 400 parts by weight of water was used based on 100 parts by weight of a total of the monomer components.

Water, the monomer, and about 3 parts by weight of sodium lauryl sulfate as an emulsifier component based on 100 parts by weight a total of the monomer components were charged into a polymerization reactor in which nitrogen was substituted, heated to about 75°C, and then 0.005 mol of potassium persulfate as a polymerization initiator was added thereto to initiate emulsion polymerization.

While maintaining the temperature at about 75°C, the polymerization reaction was performed for about 7 hours to obtain an emulsion type binder.

**Preparation Example 2: Second polymerization (shell formation)**

As additional monomers for forming the shell, 74.9 g of n-butyl acrylate, 15 g of styrene, 10 g of methacrylic acid, and 0.1 g of allyl methacrylate were used, and 933.3 g (based on a solid content 233.33 g) of the emulsified polymer particle emulsion obtained in Preparation Example 1 was used.

About 105 g of water was used as a solvent.

Water, the monomer, the latex particle core of Preparation Example 1, and about 0.2 parts by weight of sodium polyoxyethylene lauryl ether sulfate as an emulsifier component based on 100 parts by weight a total of the monomer components were charged into a polymerization reactor in which nitrogen was substituted. While maintaining the temperature at about 80°C, 0.33 parts by weight of ammonium persulfate based on 100 parts by weight of the monomer component was added as a polymerization initiator to initiate emulsion polymerization.

While maintaining the temperature at about 80°C, the reaction was performed for about 5 hours to obtain an emulsion type binder including emulsified polymer particles having a core-shell structure. (average particle size: 73 nm; coagulum content: 130 ppm; electrolyte solution uptake: 167%)

The pH was adjusted to 6 using an aqueous sodium hydroxide solution. (coagulum content after neutralization: 10 ppm)

**Example 2:**

An emulsion type binder including emulsified polymer particles having a core-shell structure was obtained in the same manner as in Example 1, except that 69.9 g of n-butyl acrylate, 30 g of methacrylic acid, and 0.1 g of allyl methacrylate were used as monomers during the second polymerization.

(Average particle size: 78 nm; coagulum content before neutralization: 900 ppm; coagulum after neutralization: 40 ppm; electrolyte solution uptake: 95%)

**Example 3:**

An emulsion type binder including emulsified polymer particles having a core-shell structure was obtained in the same manner as in Example 1, except that 59.9 g of n-butyl acrylate, 40 g of methacrylic acid, and 0.1 g of allyl methacrylate were used as monomers during the second polymerization.

(Average particle size: 101 nm; coagulum content before neutralization: 550 ppm; coagulum after neutralization: 60 ppm; electrolyte solution uptake: 29%)

**Comparative Example 1:**

64.9 g of n-butyl acrylate, 25 g of styrene, 10 g of methacrylic acid, and 0.1 g of allyl methacrylate were used as the monomer.

About 105 g of water was used as a solvent.

Water, the monomer, and about 0.8 parts by weight of sodium polyoxyethylene lauryl ether sulfate and about 0.4 parts by weight of sodium dodecyl diphenyl ether disulfonate as the emulsifier component based on 100 parts by weight a total of the monomer components were charged into a polymerization reactor in which nitrogen was substituted. While maintaining the temperature at about 80°C, 0.85 parts by weight of ammonium persulfate based on 100 parts by weight of the monomer components was added as a polymerization initiator to initiate emulsion polymerization.

While maintaining the temperature at about 80°C, the reaction was performed for about 8 hours to obtain an emulsion type binder including acrylate-based emulsified polymer particles. (average particle size: 123 nm; coagulum content: 30 ppm; electrolyte solution uptake: 523%)

The pH was adjusted to 6 using an aqueous sodium hydroxide solution. (coagulum content after neutralization: 90 ppm)

**Comparative Example 2:**

An emulsion type binder including acrylate-based emulsified polymer particles was obtained in the same manner as in Comparative Example 1, except that 60 g of n-butyl acrylate, 20 g of styrene, and 20 g of methacrylic acid were used as the monomer.

(Average particle size: 118 nm; coagulum content before neutralization: 150 ppm; coagulum content after neutralization: 210 ppm; electrolyte solution uptake: 446%)

**Comparative Example 3:**

**Preparation of polyacrylic acid polymer aqueous solution (C)**

100 g of acrylic acid was used as the monomer.

Water and the monomer were charged into a polymerization reactor in which nitrogen was substituted. While maintaining the temperature at about 80°C, 0.16 parts by weight of ammonium persulfate based on 100 parts by weight of the monomer components was added as a polymerization initiator to initiate polymerization.

While maintaining the temperature at about 80°C, the reaction was performed for about 5 hours to obtain a binder (C) in the form of an aqueous solution.

The pH of the obtained polyacrylic acid polymer aqueous solution (C) was adjusted to 7 using sodium hydroxide. (Coagulum content: 0 ppm; electrolyte solution uptake: 0%)

**Comparative Example 4:**

**Preparation Example 3: First polymerization (core formation)**

As a monomer for forming the core, 51.5 g of 1, 3-butadiene, 36.5 g of styrene, 10 g of methyl methacrylate, and 2 g of a mixture of acrylic acid and itaconic acid in a ratio of 5:5 were used.

As a solvent, about 400 parts by weight of water based on 100 parts by weight of a total of the monomer components was used.

Water, the monomer, and about 3 parts by weight of sodium lauryl sulfate as an emulsifier component based on 100 parts by weight a total of the monomer components were charged into a polymerization reactor in which nitrogen was substituted, heated to about 75°C, and then 0.005 mol of potassium persulfate was added as a polymerization initiator to initiate emulsion polymerization.

While maintaining the temperature at about 75°C, the polymerization reaction was performed for about 7 hours to obtain an emulsion type binder.

**Preparation Example 4: Second polymerization (shell formation)**

As additional monomers for forming the shell, 74.9 g of n-butyl acrylate, 21.4 g of styrene, 4 g of methacrylic acid, and 0.1 g of allyl methacrylate were used, and 933.3 g (based on a solid content 233.33 g) of the emulsified polymer particle emulsion obtained in Preparation Example 3 was used.

About 115 g of water was used as a solvent.

Water, the monomer, the latex particle core of Preparation Example 3, and about 0.5 parts by weight of sodium polyoxyethylene lauryl ether sulfate as an emulsifier component based on 100 parts by weight a total of the monomer components were charged into a polymerization reactor in which nitrogen was substituted. While maintaining the temperature at about 75°C, 0.35 parts by weight of potassium persulfate based on 100 parts by weight of the monomer component was added as a polymerization initiator to initiate emulsion polymerization.

After all of the monomer and the initiator were added, the temperature was maintained at about 80°C, and the reaction was performed for about 5 hours to obtain an emulsion type binder including emulsified polymer particles having a core-shell structure. (average particle size: 75 nm; coagulum content: 10 ppm; electrolyte solution uptake: not measurable)

The pH was adjusted to 6 using an aqueous sodium hydroxide solution. (coagulum content after neutralization: 10 ppm)

**Manufacture of negative electrode mixture**

Based on 100 g of total solid content using water as a dispersion medium, 81.2 g of artificial graphite, 14.3 g of silicon oxide, 1.0 g of acetylene black, 2.3 g of the electrode binder prepared above and 1.2 g of carboxymethyl cellulose as a thickener were mixed, and a slurry for a negative electrode was manufactured so that the total solid content was 42 wt%.

**Manufacture of negative electrode**

The negative electrode mixture was coated to a thickness of about 130 μm onto a copper foil using a comma coater, dried in a dry oven at 80°C for 10 minutes, roll-pressed to have a final thickness of 95 μm, and then dried in a vacuum oven at 120°C for 12 hours to obtain a negative electrode.

**Electrode adhesive strength test**

In order to measure the adhesive strength between the electrode mixture and the current collector, the surface of each of the electrodes manufactured in Examples and Comparative Examples was cut and fixed onto a slide glass, and then the 180 degree peel strength was measured while peeling off the current collector.

After measuring 3 times for each electrode, the average value was calculated.

**Measurement of amount of deintercalation of electrode**

For each of the electrodes manufactured in the Examples, Reference Examples, and Comparative Examples, the presence/absence of materials generated by deintercalation was confirmed on the side when punched using a punching machine (31mm * 43mm). It was evaluated as excellent if deintercalation did not occur, and as defective if deintercalation occurred.

**Measurement (direct conductometric titration) of the surface acidity, and the ratio of the repeating unit derived from unsaturated carboxylic acid monomer present on the surface of the emulsified polymer particle**

5 ml of 0.05M aqueous hydrochloric acid solution was added to an emulsion type binder containing 1 g of solid content.

Using the direct conductometric titration method, the change in electrical conductivity value was measured while dropwise adding 0.05M NaOH aqueous solution, and the number of moles of carboxyl groups distributed on the surface of the latex particles was calculated. The weight of the repeating unit derived from the unsaturated carboxylic acid-based monomer distributed on the surface of the latex particles was calculated therefrom, which was calculated and represented as a percentage ratio (wt%) of the total weight of the latex particles including the core and the shell.

Specific experiment and calculation principles are summarized in Journal of Applied Polymer, volume 23, issue 3, February 1, 1979, 893-901.

The measurement results are summarized in Table below.

[Table 1]

| | Latex (binder) | | | | Film | Electrode characteristic | |
|---|---|---|---|---|---|---|---|
| | Surfa ce acidit y value (mmol/g) | Cont ent of surfa ce carbo xyl grou p relati ve to total weig ht (wt% ) | Coagulu m before neutraliz ation | Coagulu m after neutraliz ation | Electro lyte solutio n uptake (%) | Adhe sive stren gth (gf/c m) | Deinterc alation of electrod e |
| Example 1 | 0.34 | 2.9 | Excellent | Excellent | 167 | 17 | Excellent |
| Exampl e2 | 1.03 | 8.8 | Excellen t | Excellen t | 52 | 19 | Excellent |
| Exampl e3 | 1.37 | 12 | Excellen t | Excellen t | 29 | 19 | Excellent |
| Compar ative Exampl e 1 | 0.94 | 8.1 | Excellen t | Excellen t | 523 | 19 | Excellent |
| Compar ative Exampl e2 | 2.14 | 18 | Excellen t | Defectiv e | 446 | 20 | Excellent |
| Compar ative Exampl e3 | - | - | Excellen t | Excellen t | 0 | 2 | Defective |
| Compar ative Exampl e 4 | 0.14 | 1.2 | Excellen t | Excellen t | Not measur able | 19 | Excellent |

Referring to Table 1, it can be clearly confirmed that in the case of Examples, the electrolyte solution uptake is less than that of Comparative Examples. Therefore, it is considered that when the electrode binder of the Examples is applied to the rechargeable battery, the electrode expansion can be effectively suppressed in the repeated charge and discharge process.

It can be clearly confirmed that the formation of coagulum is small in the neutralization step even though Examples 2 to 3 have a relatively high acid content on the particle surface as compared with Comparative Example 2. When the ratio of the unsaturated carboxylic acid-based monomer becomes extremely high as in Comparative Example 3, it can be confirmed that the electrolyte solution uptake is improved to some extent, but the adhesive strength is lowered and a deintercalation phenomenon occurs on the side surface of the coated electrode.

For reference, in Comparative Example 4, the surface acidity value is too low, and the content of the repeating unit derived from the unsaturated carboxylic acid-based monomer relative to the total particle weight is too low, whereby in the process of measuring the electrolyte solution uptake, the particles do not maintain their proper shape and collapses, which makes the measurement impossible.

## Claims

1. An electrode binder composition for rechargeable battery, comprising an emulsified polymer particle having a core-shell structure, wherein the emulsified polymer particle satisfies the following Relational Expression 1, and has a surface acidity value of 0.15 to 2.0 mmol/g:

[Relational Expression 1]

$$AC\text{-}Core < AC\text{-}Shell$$

in Relational Expression 1, AC-Core is the relative content (wt%) of a repeating unit derived from an unsaturated carboxylic acid-based monomer in a core of the emulsified polymer particle, and AC-Shell is the relative content (wt%) of a repeating unit derived from an unsaturated carboxylic acid-based monomer in a shell of the emulsified polymer particle.

2. The electrode binder composition for rechargeable battery according to claim 1,

which satisfies the following Relational Expression 2:

[Relational Expression 2]

$$2 \times AC\text{-}Core < AC\text{-}Shell$$

in Relational Expression 2, AC-Core is the relative content (wt%) of a repeating unit derived from an unsaturated carboxylic acid-based monomer in a core of the emulsified polymer particle, and AC-Shell is the relative content (wt%) of a repeating unit derived from an unsaturated carboxylic acid-based monomer in a shell of the emulsified polymer particle.

3. The electrode binder composition for rechargeable battery according to claim 1, wherein:
the core of the emulsified polymer particle comprises a repeating unit derived from a conjugated diene-based monomer, a repeating unit derived from an aromatic vinyl-based monomer, a repeating unit derived from an alkyl (meth)acrylate-based monomer, and a repeating unit derived from an unsaturated carboxylic acid-based monomer.

4. The electrode binder composition for rechargeable battery according to claim 3, wherein:
the core of the emulsified polymer particle contains 50 to 100 parts by weight of the repeating unit derived from the aromatic vinyl-based monomer based on 100 parts by weight of the repeating unit derived from the conjugated diene-based monomer.

5. The electrode binder composition for rechargeable battery according to claim 3, wherein:
the core of the emulsified polymer particle contains 5 to 50 parts by weight of the repeating unit derived from the alkyl (meth)acrylate-based monomer based on 100 parts by weight of the repeating unit derived from the conjugated diene-based monomer.

6. The electrode binder composition for rechargeable battery according to claim 3, wherein:
the core of the emulsified polymer particle contains 1 to 20 parts by weight of the repeating unit derived from the unsaturated carboxylic acid-based monomer based on 100 parts by weight of the repeating unit derived from the conjugated diene-based monomer.

7. The electrode binder composition for rechargeable battery according to claim 1, wherein:
the shell of the emulsified polymer particle comprises an alkyl (meth)acrylate-based repeating unit and a repeating unit derived from an unsaturated carboxylic acid-based monomer.

8. The electrode binder composition for rechargeable battery according to claim 7, wherein:
the shell of the emulsified polymer particle contains 5 to 100 parts by weight of the repeating unit derived from the unsaturated carboxylic acid-based monomer based on 100 parts by weight of the alkyl (meth)acrylate-based repeating unit.

9. The electrode binder composition for rechargeable battery according to claim 7, wherein:
the shell of the emulsified polymer particle contains 5 to 70 parts by weight of the repeating unit derived from the aromatic vinyl-based monomer based on 100 parts by weight of the alkyl (meth)acrylate-based repeating unit.

10. The electrode binder composition for rechargeable battery according to claim 7, wherein:

the shell of the emulsified polymer particle comprises a crosslinking bond formed by a crosslinking agent.

11. The electrode binder composition for rechargeable battery according to claim 10, wherein:
the crosslinking agent comprises both an acryloyl group and an ethylenically unsaturated bond in a molecule.

12. The electrode binder composition for rechargeable battery according to claim 1, wherein:
a weight ratio of the repeating unit derived from the unsaturated carboxylic acid-based monomer present on the surface of the emulsified polymer particle relative to the total weight of the emulsified polymer particle is 2 wt% or more.

13. The electrode binder composition for rechargeable battery according to claim 1, wherein:
an electrolyte solution uptake of the electrode binder composition is 200% or less.

14. The electrode binder composition for rechargeable battery according to claim 1, wherein:
the emulsified polymer particle has a relative content of the repeating unit derived from the unsaturated carboxylic acid-based monomer to the total weight including the core and the shell, of 5% by weight or more.

15. The electrode binder composition for rechargeable battery according to claim 1, wherein:
the emulsified polymer particle has a surface acidity value of 0.3 to 1.5 mmol/g.

16. An electrode mixture for rechargeable battery, comprising the electrode binder composition for rechargeable battery as set forth in any one of claims 1 to 15 and an electrode active material.

17. The electrode mixture for rechargeable battery according to claim 16, further comprising a conductive material.

18. An electrode for rechargeable battery, comprising:

an electrode mixture layer containing the electrode mixture for rechargeable battery as set forth in claim 16; and
an electrode current collector.

19. A rechargeable battery, comprising the electrode for rechargeable battery as set forth in claim 18.

20. The rechargeable battery according to claim 19,
which comprises at least one negative electrode active material selected from the group consisting of a carbon-based active material and a silicon-based active material.

<table>
<tr><td colspan="2" align="center">**INTERNATIONAL SEARCH REPORT**</td><td>International application No.<br><br>**PCT/KR2021/019280**</td></tr>
</table>

**A.    CLASSIFICATION OF SUBJECT MATTER**

**H01M 4/62**(2006.01)i; **H01M 4/13**(2010.01)i

According to International Patent Classification (IPC) or to both national classification and IPC

**B.    FIELDS SEARCHED**

Minimum documentation searched (classification system followed by classification symbols)

H01M 4/62(2006.01); C08F 236/10(2006.01); C08F 257/02(2006.01); H01G 11/38(2013.01); H01M 10/0525(2010.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코어-쉘 구조(core-shell structure), 유화 중합체(emulsion polymer), 표면 산도(surface acidity), 불포화 카르복실산계 단량체(unsaturated carboxylic acid monomer), 바인더(binder), 이차전지(secondary battery)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2018-0059433 A (ZEON CORPORATION) 04 June 2018 (2018-06-04)<br>See claim 1; and paragraphs [0092]-[0094] and [0208]-[0213]. | 1-20 |
| A | KR 10-2020844 B1 (ECOCHEMICAL CO., LTD. et al.) 04 November 2019 (2019-11-04)<br>See claims 1 and 4. | 1-20 |
| A | KR 10-2017-0086479 A (ZEON CORPORATION) 26 July 2017 (2017-07-26)<br>See claim 1. | 1-20 |
| A | KR 10-1698745 B1 (HANSOL CHEMICAL CO., LTD. et al.) 23 January 2017 (2017-01-23)<br>See entire document. | 1-20 |
| A | CN 111825804 A (RIZHAO GUANGDA BUILDING MATERIALS CO., LTD.) 27 October 2020 (2020-10-27)<br>See entire document. | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2022** | **05 April 2022** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/019280**

| Patent document cited in search report | | | Publication date (day/month/year) | Patent family member(s) | | | Publication date (day/month/year) |
|---|---|---|---|---|---|---|---|
| KR | 10-2018-0059433 | A | 04 June 2018 | CN | 108028379 | A | 11 May 2018 |
| | | | | JP | 2018-056466 | A1 | 12 July 2018 |
| | | | | WO | 2017-056466 | A1 | 06 April 2017 |
| KR | 10-2020844 | B1 | 04 November 2019 | | None | | |
| KR | 10-2017-0086479 | A | 26 July 2017 | CN | 107112539 | A | 29 August 2017 |
| | | | | CN | 107112539 | B | 19 June 2020 |
| | | | | JP | 2017-075946 | A1 | 24 August 2017 |
| | | | | JP | 2017-141495 | A1 | 06 April 2017 |
| | | | | JP | 6337093 | B2 | 06 June 2018 |
| | | | | JP | 6601413 | B2 | 06 November 2019 |
| | | | | US | 10208408 | B2 | 19 February 2019 |
| | | | | US | 2017-0088980 | A1 | 30 March 2017 |
| | | | | WO | 2016-075946 | A1 | 19 May 2016 |
| KR | 10-1698745 | B1 | 23 January 2017 | | None | | |
| CN | 111825804 | A | 27 October 2020 | | None | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200178282

**Non-patent literature cited in the description**

- *Journal of Applied Polymer,* 01 February 1979, vol. 23 (3), 893-901